# EUROPEAN PATENT SPECIFICATION

(11) **EP 1 574 248 B1**
(45) Date of publication and mention of the grant of the patent: **08.08.2007**
(21) Application number: 04005969.3
(22) Date of filing: 12.03.2004
(51) Int. Cl.: B01D 53/62, B01D 53/86, B01D 53/94, B01D 53/75

(54) **Method and apparatus for oxidizing carbon monoxide**
Verfahren und Vorrichtung zur Oxidation von Kohlenmonoxid
Procédé et dispositif pour l'oxydation de monoxyde de carbone

(43) Date of publication of application: 14.09.2005
(73) Proprietor: KABUSHIKI KAISHA TOSHIBA, Tokyo (JP)
(72) Inventor: Segawa, Noboru, 1-chome Minato-ku Tokyo (JP); Araki, Kuniyuki, 1-chome Minato-ku Tokyo (JP)
(74) Representative: HOFFMANN EITLE

(56) References cited:
- US-A- 5 186 903
- US-A- 5 221 520
- US-A- 5 676 913

## Description

### BACKGROUND OF THE INVENTION

### Field of the Invention

The present invention relates to a method and apparatus for oxidizing carbon monoxide applicable to an air cleaner, a smoke separator, a deodorizing equipment, an air conditioner, or the like, particularly, in which carbon monoxide can be oxidized and eliminated at an ordinary (i.e., room) temperature or concentration thereof can be effectively reduced.

### Related Art

In a known art, there is provided an air cleaner for improving living space or working space by effectively removing an odor component, drifting fungi or the like in the air for ensuring the comfortable life. This kind of an air cleaner is disclosed in Japanese Patent Laid-open (KOKAI) Publication Nos. HEI 5-317639 and HEI 10-85533.

The air cleaner disclosed therein comprises an ozone generator for generating ozone in a ventilation path and an ozone decomposer for decomposing the generated ozone for generating an active oxygen, which are provided successively, for decomposing the ozone generated by the ozone generator by utilizing an ozone decomposing catalyst provided in the ozone decomposer so as to generate oxygen atoms in nascent state, that is, so-called active oxygen (radical oxygen), to react the active oxygen with the odor component to thereby deodorize and purify the air.

According to the air cleaner utilizing the ozone, the odor component in the air, such as ammonia, hydrogen sulfide, acetaldehyde, formaldehyde, metal-rutile captan, trimethyl amine, ethylene, methyl disulfide, and styrene can be effectively removed or eliminated.

According to the conventional air cleaner, however, it is difficult to substantially eliminate carbon monoxide (CO or CO gas) which is generated through incomplete combustion in, for example, smoking of cigarettes. The CO is a physiologically extremely poisonous substance which is coupled with hemoglobin in a blood to paralyze or inhibit the internal organ function.

On the other hand, if the CO generated through the incomplete combustion is subjected to the oxidizing reaction with the active oxygen, since the CO is oxidized into carbon dioxide (CO₂), the extremely poisonous CO amount in the air can be effectively reduced or eliminated. However, the life of the active oxygen (radical oxygen) obtained through the decomposition of the ozone is of a 10⁻⁶ to 10⁻⁷ sec order, being extremely short.

Therefore, according to the conventional air cleaner, the ozone decomposer and a lower fatty acid adsorbing filter or an active carbon adsorbing filter, which is arranged on the downstream side of the ozone decomposer, are disposed separately, and any CO adsorber for adsorbing the carbon monoxide is not provided, so that it has been difficult to carry out an oxidizing reaction of the active oxygen generated by the ozone generator with the carbon monoxide.

Further, in the air cleaner disclosed in the Japanese Patent Laid-open Publication No. HEI 5-317639, since the CO adsorber is not provided, the active oxygen generated by the ozone generator is not usable for the oxidizing reaction of the carbon monoxide so that the CO in the air cannot be oxidized, and thus the CO amount cannot be reduced or eliminated.

Moreover, in the air cleaner disclosed in the Japanese Patent Laid-open Publication No. HEI 10-85533, the ozone decomposer and the active carbon absorbing filter are provided separately, and on the other hand, the ozone decomposer comprises two filters, i.e., first and second ozone decomposing filters. Although the first filter has a platinum catalyst adhering to a filter base material, since the platinum layer and the ozone decomposing layer are layers different from each other, the active oxygen is not efficiently contacted to the carbon monoxide to carry out the oxidizing reaction, and moreover, since the adsorbing filter is made of an active carbon, it is to be replaced frequently, thus being inconvenient for achieving a long time use. US-A-5186903 and US-A-5676913 disclose methods and devices for oxidizing CO in air by generating ozone, decomposing the ozone and oxidizing CO, whereby decomposition and oxidation take place in a common reaction area.

### SUMMARY OF THE INVENTION

The present invention was conceived in consideration of the circumstances in the prior art mentioned above and an object of the present invention is therefore to provide a method and apparatus for oxidizing carbon monoxide, capable of effectively removing or eliminating an odor component and reducing a CO component through an oxidizing reaction of the CO in the air at an ordinary temperature.

Another object of the present invention is to provide a method and apparatus for oxidizing carbon monoxide, capable of realizing a long use life with a necessity of maintenance work being substantially eliminated without using any element to be changed for the oxidizing reaction of the carbon monoxide.

These and other objects can be achieved according to the present invention by providing, in one aspect, a method according to claim 1.

In a further aspect of the present invention, there is also provided an apparatus according to claim 3.

Each of the platinum based precious metal fine particles may have a particle size of 10 Å to 1,000 Å.

The oxidizing apparatus may further comprise a pre-filter disposed on the air suction port side in the air flow path for removing coarse particles in the air and at least one blower disposed on a downstream side of the pre-filter in the air flow path. An electric dust collector may be further disposed on a downstream side of the pre-filter in the air flow path for removing fine coarse particles in the air.

According to the method and apparatus for oxidizing carbon monoxide of the present invention, the odor component in the air can be substantially removed effectively by the ozone generated by the ozone generating member. The ozone decomposing member and the CO adsorbing member are provided in the common CO oxidizing reaction area so as to actively carry out the oxidizing reaction of the carbon monoxide in the air so as to reduce the CO concentration or eliminate the CO amount.

Furthermore, according to the carbon monoxide oxidizing method and apparatus of the present invention, since there is no need for disposing any member or element for the oxidizing reaction of the carbon monoxide, a troublesome work required therefor can be also eliminated, thus ensuring a long life for use.

The nature and further characteristic features of the present invention will be made more clear from the following descriptions made with reference to the accompanying drawings.

### BRIEF DESCRIPTION OF THE DRAWINGS

In the accompanying drawings:
FIG. 1 is a view for explaining principle of a method and an apparatus for oxidizing carbon monoxide according to a first embodiment of the present invention;
FIG. 2 is an illustrated view explaining a discharge photocatalyst module as an ozone generator provided for the apparatus for oxidizing carbon monoxide according to the first embodiment of the present invention;
FIG. 3 is an illustrated view of a model showing a principle of a CO oxidizing reaction in the apparatus for oxidizing carbon monoxide according to the present invention;
FIG. 4 is a graph showing effect of the CO oxidizing reaction by the apparatus for oxidizing carbon monoxide according to the present invention; and
FIG. 5 is a view for explaining principle of a method and apparatus for oxidizing carbon monoxide according to a second embodiment of the present invention.

### DESCRIPTION OF THE PREFERRED EMBODIMENTS

The invention will be described hereunder with reference to the accompanied drawings.

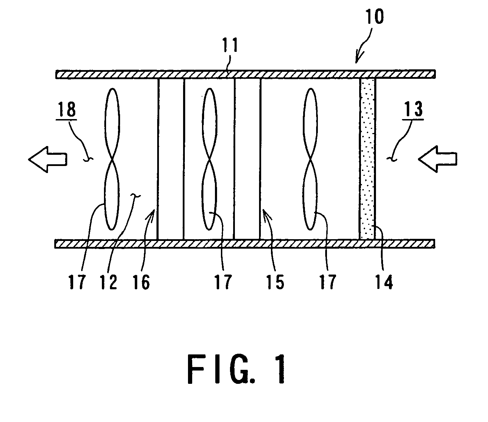

With reference to FIG. 1, showing the first embodiment of the oxidizing apparatus for oxidizing carbon monoxide, the oxidizing apparatus 10 for oxidizing carbon monoxide is generally provided for an air cleaner, a smoke separator, a deodorizing equipment (deodorizer), an air conditioner, an air cleaning/ deodorizing system, or the like, or utilized as air cleaner, smoke separator, deodorizer, or air cleaning/deodorizing system itself. This oxidizing apparatus 10 for carbon monoxide is an apparatus for deodorizing an odor component in the air and oxidizing carbon monoxide (CO) generated through incomplete combustion at an ordinary temperature so as to reduce or eliminate the concentration thereof.

The oxidizing apparatus 10 for carbon monoxide of this embodiment comprises a cylindrical casing 11 as a main body, a ventilation path 12 for ventilating the air provided in the casing 11. In the ventilation path 12, a pre-filter 14 for removing foreign substances such as dust or coarse particles in the air, an ozone generating means (ozone generator or ozone generating member) 15 for generating ozone (O₃), and a CO oxidizing member (CO oxidizing member or device) 16 for oxidizing carbon monoxide (CO) at an ordinary temperature are provided successively in this order from a side of an air inlet port (air suction port) 13. Further, one or more (at least one) blower 17 are disposed at optional positions on the ventilation path 12 of the cylindrical casing 11. The carbon monoxide in the air is thus oxidized by the CO oxidizing member 16 at an ordinary temperature to thereby generate carbon dioxide (CO₂), and thereafter, the generated CO₂ is discharged from an air outlet (air discharge port) 18 to the outside of the casing 11.

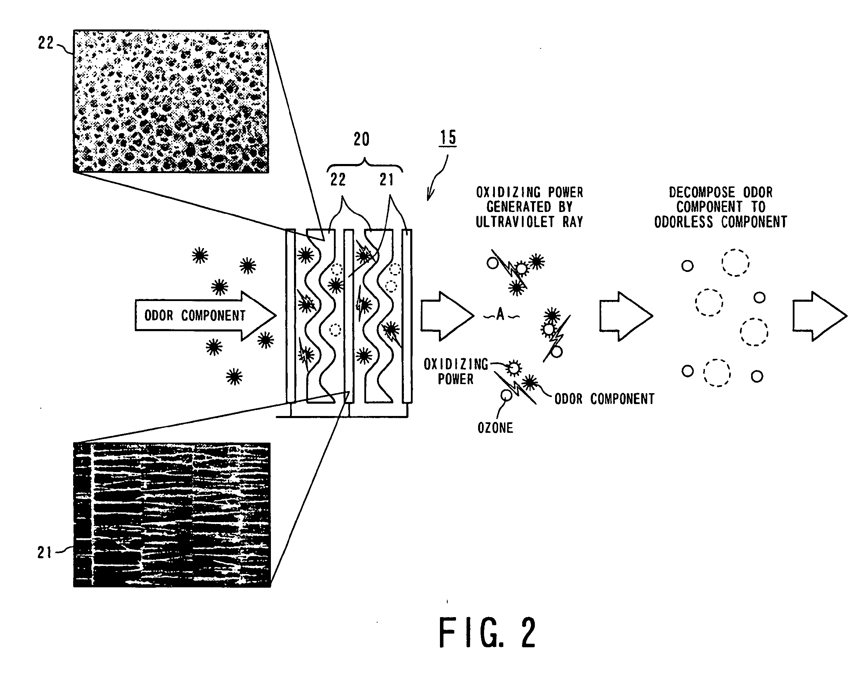

As the ozone generator 15, a discharge photocatalyst module 20 shown in FIG. 2 is used. This discharge photocatalyst module 20 is provided with a porous ceramics 22 carrying the photocatalyst at a portion between electric discharge electrodes 21. The porous ceramics 22 comprises a photocatalyst carrier for carrying the photocatalyst, and the ultraviolet ray generated by the electric discharge is directly utilized for exciting the photocatalyst. Such porous ceramics 22 also acts to carry out a filtering function.

Through such irradiation of the ultraviolet ray to the photocatalyst, a disinfecting function by the generated ozone, an oxidizing function and a decomposing function of the photocatalyst by the activating carbon are attained or facilitated, and as a result, the air can be effectively purified and deodorized. The odor component can be decomposed by the electric discharge effect, the ozone generation effect and the photocatalyst applying effect by about 10 times, in decomposing performance, in comparison with decomposing effect by a conventional lamp type photocatalyst module.

When such discharge photocatalyst module 20 is employed for the ozone generator 15, the light emission by the electric discharge can be utilized as a light source so that constitutional elements or like such as an active carbon and a lamp, which are required to be exchanged in a long use, can be eliminated, thus realizing a long usable life time.

Furthermore, by reforming or modifying the surface area of the photocatalyst so as to provide a photocatalyst module having a large specific surface area, the photocatalyst decomposing function can be promoted and the air purifying function and the air deodorizing function can be improved.

The ozone (O₃) generated by the ozone generator 15 is subjected to the air purifying and deodorizing processes in the ozone generating area A and is blown by the blower 17 towards the CO oxidizing member 16.

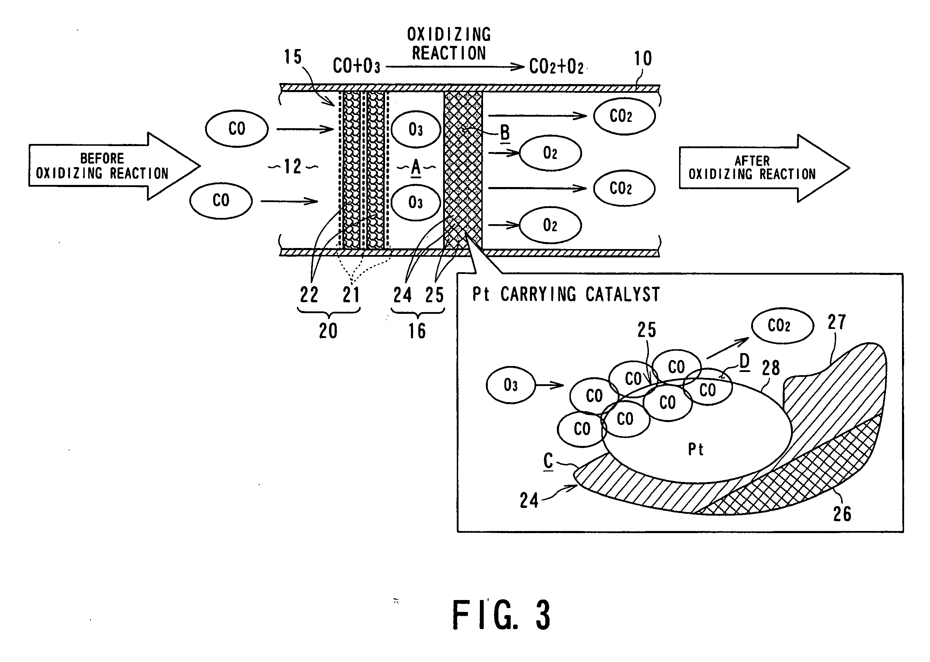

As shown in FIG. 3, the CO oxidizing member 16 comprises an ozone decomposer (decomposing element) 24 for decomposing the generated ozone and then generating an active oxygen (radical oxygen), and a CO adsorber (adsorbing element) 25 for adsorbing the carbon monoxide (CO) generated through the incomplete combustion, which constitute an oxidizing reaction area B for carbon monoxide. The ozone decomposer 24 and the CO adsorber 25 are provided in the common CO oxidizing reaction area B so as to carry out the oxidizing reaction of the carbon monoxide (CO) by using the active oxygen.

The ozone decomposer 24 is made of at least one ozone decomposing substance 27 selected from the group consisting of an oxide of Mn, Cu, or Ni, a porous carbon containing Ni, Co, Mn, or Cu, a zeolite and a clay mineral.

The ozone decomposing substance 27 is formed itself as a porous member having a honeycomb structure or a three dimensional mesh structure. In this case, since the ozone decomposing means 24 also attains a function as a carrier, so that a base member can be eliminated.

On the other hand, the CO adsorber 25 constituting the ozone generator 15 is composed of fine particles 28 of at least one platinum based VIII group precious metal selected from the group consisting of platinum, iridium, osmium, palladium, rhodium, and ruthenium.

The platinum based precious metal fine particles 28 each has a particle size of 10 Å to 1,000 Å, preferably a particle size of 50 Å to 400 Å. The fine particles 28 are carried on the ozone decomposing substance 27 as a waste ozone catalyst constituting the CO adsorber 25 as shown in FIG. 3. That is, a large number of such platinum based precious metal fine particles, such as the platinum fine particles 28, are carried densely on the ozone decomposing substance 27 as the waste ozone catalyst so as to form a common CO oxidizing reaction layer or a reaction surface. In the case of using the platinum (Pt) fine particles 28 for the CO adsorber 25, the ozone decomposing substance 27 constitutes a platinum carrying catalyst.

The ozone decomposing substance 27 constituting the ozone decomposer 24 decomposes the ozone (O₃) so as to generate the active oxygen (radical oxygen: O), which has a life time of a 10⁻⁶ to 10⁻⁷ sec order, being extremely short. In order to oxidize the carbon monoxide (CO) by the active oxygen, it is therefore necessary to densely capture the carbon monoxide in an effective reaction distance as the effective life of the active oxygen.

That is, it is necessary for the active oxygen (oxygen atom O) to be contacted and reacted with the carbon monoxide molecule during the process from its generation to annihilation, and through this contact, the oxidizing reaction can be generated at an ordinary temperature. For this reason, it becomes necessary to densely capture a large number of carbon monoxide molecules in the extreme vicinity of the active oxygen generating area through the ozone decomposition.

In the oxidizing apparatus 10 for oxidizing the carbon monoxide, a CO adsorbing area D for adsorbing the carbon monoxide (CO) is formed in the ozone decomposing area C composed of the ozone decomposer 24. The CO adsorbing area D is a mesh like area composed of the CO adsorber 25 of the fine particle structure.

With reference to Fig. 3, the ozone decomposing area C of the ozone decomposer 24 and the CO adsorbing area D of the CO adsorber 25 are commonly formed in the CO oxidizing reaction area B, so that the carbon monoxide generated and captured through the incomplete combustion contacts the active oxygen and easily carry out the oxidizing reaction at an ordinary temperature. Although the carbon monoxide is physiologically extremely poisonous and it couples with hemoglobin in the blood to thereby paralyze or deteriorate its function, its poisoning or toxicity can be removed by oxidizing the carbon monoxide to the carbon dioxide.

The function or operation of the oxidizing apparatus 10 for oxidizing carbon monoxide of the structures mentioned above will be explained hereunder.

The oxidizing apparatus 10 can oxidize the carbon monoxide generated in the incomplete combustion at an ordinary temperature so as to eliminate the carbon monoxide or remarkably reduce the concentration thereof. In addition, it is applicable for deodorizing an interior of a vehicle such as passenger car or a taxi as an air purifying (cleaning) and deodorizing device; deodorizing the disinfection odor in a hospital or a residential care institution or like; deodorizing a car refrigerator, a domestic refrigerator, a truck cargo room or the like; deodorizing a toilet and a raw garbage odor; and so on.

In the oxidizing apparatus 10, the coarse particles such as dusts and dirt flown into the ventilation path 12 of the casing 11 can be removed by the pre-filter 14 arranged therein. The air after the removal of the coarse particles is forcibly blown and guided in the ventilation path 12 by the blower 17 towards the ozone generator 15.

In the ozone generator 15, the ozone is generated through the corona discharge to thereby remove, eliminate or disinfect the odor component in the air through the reaction with the generated ozone.

As shown in FIGS. 2 and 3, in the case that the ozone generator 15 is composed of the discharge photocatalyst module 20, the odor component in the air can be decomposed into an odorless component by the disinfecting function due to the ultraviolet ray, the oxidizing function of the generated ozone, the disinfecting function, and the decomposition due to the photocatalyst.

For example, in a smoking room, a combustion gas from cigarette includes, in addition to the CO₂, carbon monoxide or ammonium by the incomplete combustion, alcohols and aldehydes. Furthermore, there may be listed up formaldehyde contained in construction material for buildings, ammonium contained in raw garbage odor or food odor, hydrogen sulfide, trimethyl amine, ammonium, acetic acid, acetaldehyde, formaldehyde, trimethyl amine contained in a vehicle interior air, or like.

The odor components in the air, such as ammonium, hydrogen sulfide, trimethyl amine, methyl dioxide, acetaldehyde, formaldehyde, styrene, or like can be decomposed and removed as odorless air while passing through the ozone generating area A in the cylindrical casing 11 of the oxidizing apparatus 10. However, the CO gas as incomplete combustion gas passes through the ozone generating area A as it is and is guided to the CO oxidizing area B.

The air from which the odor component is removed is guided to the CO oxidizing member or element 16 consisting the CO oxidizing area B together with the carbon monoxide. The CO oxidizing member 16 is provided, in the CO oxidizing reaction area B, with the ozone decomposer 24 and the CO adsorber 25 so as to carry out the oxidizing reaction to the carbon monoxide. The CO adsorbing area D composed of the CO adsorber 25 is provided in the ozone decomposing area C constituting the ozone decomposer 24. The ozone decomposing area C and the CO adsorbing area D thus form the common CO oxidizing reaction area B.

In the CO oxidizing member 16, the CO adsorbing area D, in which the fine particles 28 for adsorbing the carbon monoxide (CO) are densely distributed, is provided in the vicinity of the ozone decomposing area C for generating the active oxygen (radical oxygen) by decomposing the ozone (O₃). The CO adsorber 25 provided for the CO adsorbing area D is composed of the platinum based precious metal fine particles 28, which are carried on the ozone decomposing layer of the ozone decomposing substance 27 formed to the porous member or on the surface of the porous member in a densely distributed state. Therefore, the surface area of the platinum based precious metal fine particles 28 for adsorbing the carbon monoxide can be made larger, and as a result, the CO carrying area (CO adsorbing area) can be made larger.

Accordingly, the CO adsorbing area D having a large CO carrying area for adsorbing the carbon monoxide (CO) particles can be disposed in the extreme vicinity of the portion or area at which the ozone is generated through the operation of the ozone decomposer 24. Furthermore, the CO adsorber 25 forming the CO adsorbing area D has a large CO carrying area so that the carbon monoxide particles in the air can be effectively captured densely. On the other hand, the CO adsorber 25 carrying a large number of platinum based precious metal fine particles 28 is positioned so that the ozone decomposing layer of the ozone decomposing substance 27 is formed in the vicinity of the fine particles so as to form the common oxidizing reaction layer.

Since the CO oxidizing member 16 is provided, in its ozone decomposing area C, with the CO adsorbing area D in which a large number of fine particles 28 are distributed, the active oxygen generated by the ozone decomposer 24 can easily contact the carbon monoxide in the high concentration distribution in the vicinity thereof so as to facilitate the oxidizing reaction. Therefore, in the CO oxidizing element 16, the active oxygen generated by the ozone decomposer 24 can contact the highly concentrated carbon monoxide captured by the CO adsorber 25 to thereby easily facilitate the oxidizing reaction.

As mentioned above, the oxidizing reaction can be promoted only by capturing the carbon monoxide in the extreme vicinity of the active oxygen generating area at which the active ozone is generated by the ozone decomposer 24. That is, it is confirmed for the first time that the carbon monoxide can be oxidized easily by capturing the carbon monoxide at a high concentration in the vicinity of the active oxygen generating portion.

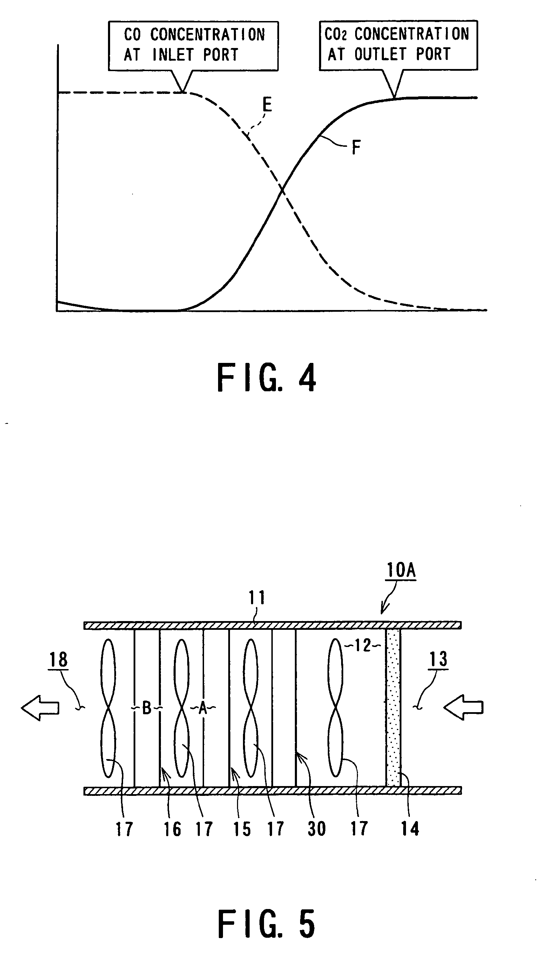

With reference to FIG. 4, in the use of the carbon monoxide oxidizing apparatus 10 of the characters mentioned above, the carbon monoxide can be subjected to the oxidizing reaction by the active oxygen at an ordinary temperature by passing the air through the ozone generating area A and the CO oxidizing reaction area B of the ventilation path 12, and moreover, the concentration of the carbon monoxide contained in the air discharged from the air outlet 18 of the ventilation path 12 can be made substantially zero as shown by the concentration curve E in FIG. 4. Furthermore, as represented by the concentration curve F in FIG. 4, the carbon dioxide concentration increase through the carbon monoxide oxidizing reaction. The carbon monoxide concentration and the carbon dioxide concentration will be measured by a CO gas concentration meter and a CO₂ gas concentration meter, respectively.

As is apparent from FIG. 4, according to the oxidizing apparatus 10 of the present invention, the carbon monoxide can be oxidized efficiently and effectively at an ordinary temperature so as to produce carbon dioxide. Accordingly, the carbon monoxide concentration can be reduced or made substantially zero by oxidizing the carbon monoxide.

Even in the case that the ozone is decomposed by the ozone decomposer 24 of the CO oxidizing member 16 to thereby generate the active oxygen, since the life of the active oxygen is extremely short, the active oxygen can be surely prevented from being discharged externally through the air outlet 18.

FIG. 5 is a diagram showing a principal of the second embodiment of an oxidizing apparatus 10A for oxidizing carbon monoxide according to the present invention.

This carbon monoxide oxidizing apparatus 10A differs from the oxidizing apparatus 10 shown in FIG. 1 in its basic structure. That is, in this oxidizing apparatus 10A of the second embodiment, an electric dust collector 30 is arranged in the downstream side of the pre-filter 14 in the ventilation path 12. The electric dust collector 30 is disposed for the purpose of removing more fine dust or like which cannot be removed by the pre-filter 14.

Further, the other configuration and function are substantially the same as those of the first embodiment, so that the detail explanations thereof are omitted herein.

## Claims

1. A method of oxidizing carbon monoxide (CO) in air flowing in a structure forming a path, the method comprising the steps of:
generating ozone in an ozone generating area by use of a discharge type photocatalyst module comprising a porous ceramic material carrying a photocatalyst and electric discharge electrodes on either side of said porous ceramic material, the ozone being for deodorizing an odor component of the air,;
decomposing the generated ozone in an ozone decomposing area by use of an ozone decomposing member; and
adsorbing and carrying carbon monoxide generated through incomplete combustion in a CO adsorbing area by use of a CO adsorbing member;
wherein the ozone decomposing area and the CO absorbing area are formed in a common oxidizing reaction area in which the carbon monoxide is oxidized by using active oxygen generated in the ozone decomposing step in the oxidizing reaction area,
wherein the ozone decomposing member is made of at least one ozone decomposing substance selected from the group consisting of an oxide of Mn, Cu or Ni, a porous carbon containing Ni, Co, Mn, or Cu, a zeolite and a clay mineral in the form of a honeycomb structure or a three dimensional mesh structure, and
wherein the CO adsorbing member is composed of fine particles of at least one platinum based precious metal selected from the group consisting of platinum, iridium, osmium, palladium, rhodium, and ruthenium, said fine particles being carried by the ozone decomposing member.

2. A method according to claim 1, wherein the air is flowing through a ventilation path having a suction port and a discharge port, the method further comprising the step of:
deodorizing an odor component in the air by the ozone generated in the ozone generating area;
wherein the ozone decomposing area is disposed downstream of the ozone generating area in the ventilation path; and
wherein the CO adsorbing area is in the ventilation path.

3. An apparatus for oxidizing carbon monoxide in air flowing in a structure forming a path, the apparatus comprising:
an ozone generating member which is a discharge type photocatalyst module comprising a porous ceramic material carrying a photocatalyst and electric discharge electrodes on either side of said porous ceramic material, and which is disposed in the path, the ozone generated by said member being for deodorizing an odor component in the air;
an ozone decomposing member disposed in the path for decomposing the ozone to generate active oxygen; and
a CO adsorbing member disposed in the path for adsorbing and carrying carbon monoxide generated through incomplete combustion;
wherein the ozone decomposing member and the CO adsorbing member are disposed in a common oxidizing reaction area so as to oxidize the carbon monoxide by the active oxygen,
wherein the ozone decomposing member is made of at least one ozone decomposing substance selected from the group consisting of an oxide of Mn, Cu or Ni, a porous carbon containing Ni, Co, Mn, or Cu, a zeolite and a clay mineral in the form of a honeycomb structure or a three dimensional mesh structure to which fine particles constituting to CO adsorbing member are carried, and
wherein the CO adsorbing member is composed of fine particles of at least one platinum based precious metal selected from the group consisting of platinum, iridium, osmium, palladium, rhodium, and ruthenium, said fine particles being carried by the ozone decomposing member.

4. An apparatus according to claim 3, wherein the platinum based precious metal fine particles each has a particle size of 10 Å to 1,000 Å.

5. An apparatus according to claim 3, further comprising a pre-filter disposed on the air suction port side in the air flow path for removing coarse particles in the air and at least one blower disposed on a downstream side of the pre-filter in the air flow path.

6. An apparatus according to claim 5, further comprising an electric dust collector disposed on a downstream side of the pre-filter in the air flow path for removing fine coarse particles in the air.

## Patentansprüche

1. Verfahren zum Oxidieren von Kohlenmonoxid (CO) in Luft, die in einer Struktur fließt, die einen Weg bildet, wobei das Verfahren folgende Schritte umfaßt:
Erzeugung von Ozon in einer ozonerzeugenden Fläche durch Verwendung eines Fotokatalysatormoduls vom Entladungstyp, umfassend ein poröses Keramikmaterial, das einen Fotokatalysator und elektrische Entladungselektroden an jeder Seite des porösen Keramikmaterials trägt, wobei das Ozon zum Desodorieren einer Geruchskomponente der Luft ist;
Zersetzen des erzeugten Ozons in einer Ozonzersetzungsfläche durch Verwendung eines Ozonzersetzungsteils; und
Adsorbieren und Tragen von Kohlenmonoxid, das durch unvollständige Verbrennung erzeugt ist, in einer CO-Adsorptionsfläche durch Verwendung eines CO-Adsorptionsteils;
worin die Ozonzersetzungsfläche und die CO-Absorptionsfläche in einer allgemeinen Oxidationsreaktionsfläche gebildet sind, worin das Kohlenmonoxid durch Verwendung von aktivem Sauerstoff oxidiert wird, der im Ozonzersetzungsschritt in der Oxidationsreaktionsfläche erzeugt ist,
worin das Ozonzersetzungsteil aus zumindest einer Ozonzersetzungssubstanz, ausgewählt aus der Gruppe bestehend aus einem Oxid von Mn, Cu oder Ni, einem porösen Kohlenstoff, umfassend Ni, Co, Mn oder Cu, einem Zeolith und einem Lehmmaterial in der Form einer Wabenstruktur oder einer dreidimensionalen Meshstruktur gebildet ist, und
worin das Co-Adsorptionsteil sich aus feinen Teilchen aus zumindest einem Edelmetall auf Platinbasis zusammensetzt, ausgewählt aus der Gruppe bestehend aus Platin, Iridium, Osmium, Palladium, Rhodium und Ruthen, wobei die feinen Teilchen durch das Ozonzersetzungsteil getragen werden.

2. Verfahren nach Anspruch 1, worin die Luft durch einen Ventilationsweg mit einem Saugteil und einem Entladungsteil fließt, wobei das Verfahren weiterhin den Schritt umfaßt:
Desodorieren einer Geruchskomponente in der Luft durch das Ozon, das in der Ozonerzeugungsfläche erzeugt ist;
worin die Ozonzersetzungsfläche abwärts der Ozonerzeugungsfläche in dem Ventilationsweg angeordnet ist; und
worin die CO-Adsorptionsfläche in dem Ventilationsweg liegt.

3. Anlage zur Oxidation von Kohlenmonoxid in Luft, die in einer Struktur fließt, die einen Weg bildet, wobei die Anlage umfaßt:
ein Ozonerzeugungsteil, das ein Fotokatalysatormodul vom Entladungstyp ist, umfassend ein poröses Keramikmaterial, das einen Fotokatalysator und elektrische Entladungselektroden an jeder Seite des porösen Keramikmaterials umfaßt und das in dem Weg angeordnet ist, wobei das durch das Teil erzeugte Ozon zum Desodorieren einer Geruchskomponente in der Luft dient;
ein Ozonzersetzungsteil, das im Weg zum Zersetzen des Ozons angeordnet ist, zum Erzeugen von aktivem Sauerstoff; und
ein CO-Adsorptionsteil, das in dem Weg zum Adsorbieren und Tragen von Kohlenmonoxid angeordnet ist, das durch unvollständige Verbrennung erzeugt ist;
worin das Ozonzersetzungsteil und das CO-Adsorptionsteil in einer allgemeinen Oxidationsreaktionsfläche angeordnet sind, so daß das Kohlenmonoxid durch den aktiven Sauerstoff oxidiert wird;
worin das Ozonzersetzungsteil aus zumindest einer Ozonzersetzungssubstanz erzeugt ist, ausgewählt aus der Gruppe bestehend aus einem Oxid aus Mn, Cu oder Ni, einem porösen Kohlenstoff, umfassend Ni, Co, Mn oder Cu, Zeolith und einem Lehmmaterial in der Form einer Wabenstruktur oder einer dreidimensionalen Meshstruktur, die feine Teilchen trägt, die das CO-Adsorptionsteil ausmachen, und
worin das CO-Adsorptionsteil sich aus feinen Teilchen aus zumindest einem Edelmetall auf Platinbasis zusammensetzt, ausgewählt aus der Gruppe bestehend aus Platin, Iridium, Osmium, Palladium, Rhodium und Ruthen, wobei die feinen Teilchen durch das Ozonzersetzungsteil getragen sind.

4. Anlage nach Anspruch 3, worin die feinen Teilchen aus dem Edelmetall aus Platinbasis jeweils eine Teilchengröße von 10 bis 1.000 Å haben.

5. Anlage nach Anspruch 3, weiterhin umfassend einen Vorfilter, der an der Luftsaugseite in dem Luftfließweg angeordnet ist, zum Entfernen von groben Teilchen aus der Luft, und zumindest ein Blasteil, das an einer Abwärtsseite des Vorfilters in dem Luftfließweg angeordnet ist.

6. Anlage nach Anspruch 5, weiterhin umfassend einen elektrischen Staubsammler, der an einer Abwärtsseite des Vorfilters in dem Luftfließweg angeordnet ist, zum Entfernen von feinen groben Teilchen in der Luft.

## Revendications

1. Procédé d'oxydation du monoxyde de carbone (CO) dans l'air s'écoulant dans une structure formant une conduite, le procédé comprenant les étapes consistant :
à produire de l'ozone dans une zone de production d'ozone par l'utilisation d'un module de photocatalyseur de type à décharge comprenant une matière céramique poreuse portant un photocatalyseur et des électrodes de décharge électrique de chaque côté de ladite matière céramique poreuse, l'ozone étant destiné à désodoriser un composant odorant de l'air ;
à décomposer l'ozone produit dans une zone de décomposition de l'ozone par l'utilisation d'un élément décomposant l'ozone ; et
à adsorber et à conduire le monoxyde de carbone produit par une combustion incomplète dans une zone d'adsorption du CO par l'utilisation d'un élément adsorbant le CO ;
dans lequel la zone de décomposition de l'ozone et la zone d'adsorption du CO sont formées dans une zone de réaction oxydante commune dans laquelle le monoxyde de carbone est oxydé en utilisant l'oxygène actif produit dans l'étape de décomposition de l'ozone dans la zone de réaction oxydante,
dans lequel l'élément décomposant l'ozone est constitué d'au moins une substance décomposant l'ozone choisie dans le groupe comprenant un oxyde de Mn, de Cu ou de Ni, un carbone poreux contenant du Ni, du Co, du Mn, ou du Cu, une zéolite et une argile minérale sous la forme d'une structure en nid d'abeilles ou d'une structure de maille tridimensionnelle, et
dans lequel l'élément adsorbant le CO est composé de particules fines d'au moins un métal précieux à base de platine choisi dans le groupe comprenant le platine, l'iridium, l'osmium, le palladium, le rhodium, et le ruthénium, lesdites particules fines étant portées par l'élément décomposant l'ozone.

2. Procédé selon la revendication 1, dans lequel l'air s'écoule à travers une conduite de ventilation ayant un orifice d'aspiration et un orifice de décharge, le procédé comprenant en outre l'étape consistant :
à désodoriser un composant odorant dans l'air par l'ozone produit dans la zone de production d'ozone ;
dans lequel la zone de décomposition de l'ozone est disposée en aval de la zone de production d'ozone dans la conduite de ventilation ; et
dans lequel la zone d'adsorption du CO est située dans la conduite de ventilation.

3. Appareil pour l'oxydation du monoxyde de carbone dans l'air s'écoulant dans une structure formant une conduite, l'appareil comprenant :
un élément produisant de l'ozone qui est un module de photocatalyseur de type à décharge comprenant une matière céramique poreuse portant un photocatalyseur et des électrodes de décharge électrique de chaque côté de ladite matière céramique poreuse, et qui est disposé dans la conduite, l'ozone produit par ledit élément étant destiné à désodoriser un composant odorant dans l'air ;
un élément décomposant l'ozone disposé dans la conduite pour décomposer l'ozone pour produire de l'oxygène actif ; et
un élément adsorbant le CO disposé dans la conduite pour adsorber et conduire le monoxyde de carbone produit par une combustion incomplète ;
dans lequel l'élément décomposant l'ozone et l'élément adsorbant le CO sont disposés dans une zone de réaction oxydante commune de sorte à oxyder le monoxyde de carbone par l'oxygène actif,
dans lequel l'élément décomposant l'ozone est constitué d'au moins une substance décomposant l'ozone choisie dans le groupe comprenant un oxyde de Mn, de Cu ou de Ni, un carbone poreux contenant du Ni, du Co, du Mn, ou du Cu, une zéolite et une argile minérale sous la forme d'une structure en nid d'abeilles ou d'une structure de maille tridimensionnelle, par lequel sont portées les particules fines constituant l'élément adsorbant le CO, et
dans lequel l'élément adsorbant le CO est composé de particules fines d'au moins un métal précieux à base de platine choisi dans le groupe comprenant le platine, l'iridium, l'osmium, le palladium, le rhodium, et le ruthénium, lesdites particules fines étant portées par l'élément décomposant l'ozone.

4. Appareil selon la revendication 3, dans lequel les particules fines de métal précieux à base de platine ont chacune une dimension de particule de 10 Å à 1 000 Å.

5. Appareil selon la revendication 3, comprenant en outre un préfiltre disposé sur le côté de l'orifice d'aspiration d'air dans la conduite d'écoulement d'air pour retirer les particules grossières dans l'air et au moins un ventilateur soufflant disposé sur un côté en aval du préfiltre dans la conduite d'écoulement d'air.

6. Appareil selon la revendication 5, comprenant en outre un dépoussiéreur électrique disposé sur un côté en aval du préfiltre dans la conduite d'écoulement d'air pour retirer les particules grossières fines dans l'air.
